# EUROPÄISCHE PATENTANMELDUNG

(11) **EP 1 167 737 A2**
(43) Veröffentlichungstag der Anmeldung: **02.01.2002**
(21) Anmeldenummer: 01111232.3
(22) Anmeldetag: 15.05.2001
(51) Int. Cl.: F02F 7/00, F16C 9/04, F16J 1/14

(54) **Pleuelstange**

(30) Priorität: 26.06.2000 DE 10029950
(71) Anmelder: Volkswagen Aktiengesellschaft, 38436 Wolfsburg (DE)
(72) Erfinder: Fanslau, Peter, 38448 Wolfsburg (DE); Tremper, Karsten, 38106 Braunschweig (DE); Wachtel, Jost, 38165 Lehre (DE)

(57) **Zusammenfassung**

Die Erfindung betrifft eine Pleuelstange für eine Brennkraftmaschine mit einem Pleuelauge (10), welches mittels eines Kolbenbolzens (18) schwenkbar mit einem Kolben verbindbar ist. Hierbei ist eine dem Kolbenbolzen (18) zugewandte Innenwand (12, 14) des Pleuelauges (10) wenigstens teilweise derart von einer zylindrischen Form abweichend ausgeformt, daß die Innenwand an einer den Kolbenbolzen (18) mit Kraft beaufschlagenden Seite (12, 14) einer Außenwand des Kolbenbolzens (18) in unter Last deformiertem Zustand folgt.

## Beschreibung

Die Erfindung betrifft eine Pleuelstange für eine Brennkraftmaschine mit einem Pleuelauge, welches mittels eines Kolbenbolzens schwenkbar mit einem Kolben verbindbar ist, gemäß dem Oberbegriff des Anspruchs 1.

Aus der DE 30 36 062 A1 ist ein Kolben für Verbrennungskraftmaschinen bekannt, bei dem ein zylindrischer Kolbenbolzen in einer Kolbenbolzenbohrung mit einem ovalen Querschnitt gelagert ist. Die Kolbenbolzenbohrung ist in einer Bolzennabe in ihrem oberen Scheitel von außen nach innen aufgeweitet und verläuft in ihrem unteren Scheitel parallel zur Achse des Kolbenbolzens. Ein Abstand zwischen der Innenseite des Kolbenbodens und der oberen parallel zur Achse des Kolbens verlaufenden Scheitellinie der Kolbenbolzenbohrung entspricht einer für die Deformation des Kolbens entscheidenden Dehnlänge.

Aus der DE 41 33 586 A1 ist es bekannt, im Bereich des kleinen Pleuelauges Entlastungsnuten vorzusehen. Hierdurch werden örtliche Belastungen der Lagerbuchse im kleinen Pleuelauge aufgrund des sich unter Belastung verformenden Kolbenbolzens, wie eine Abplattung des Bolzens, verhindert.

Beide vorgenannten Anordnungen haben jedoch den Nachteil, daß sie aufwendig in der Herstellung sind und den Belastungen des Pleuelauges durch den sich unter Belastung deformierenden Kolbenbolzen nur teilweise entgegenwirken können. Bedingt durch die Deformation des Kolbenbolzens unter Belastung (Biegen) kommt es an einem äußeren Rand des Pleuelauges zu Druckspitzen. Dies bedingt eine Verklemmung zwischen Kolbenbolzen und Pleuelauge, was zu einem erhöhten Verschleiß der Kolbenbolzenaugen und auch späteren Verschleiß bzw. Fressen der Kolbenbolzenlagerung. Ferner kommt es in einem Raum zwischen den Anlagepunkten an den äußeren Rändern des Pleuelauges zu einer nicht ausreichenden Schmierölversorgung, da durch den Anpreßdruck am äußeren Rand keine ausreichende Menge Schmieröl in das Pleuelauge einströmen kann. Ggf. wird durch den hohen partiellen Anpreßdruck der Ölfilm durchgedrückt, was zu einer weiteren Erhöhung der Verklemmung zwischen Kolbenbolzen und Pleuelauge mangels ausreichender Schmierung führt.

Der vorliegenden Erfindung liegt daher die Aufgabe zugrunde, eine Pleuelstange der obengenannten Art zur Verfügung zu stellen, wobei die obengenannten Nachteile überwunden werden und einer mechanischen Belastung des Pleuelauges durch Verformung des Kolbenbolzens unter Last effektiv entgegengewirkt wird.

Diese Aufgabe wird erfindungsgemäß durch eine Pleuelstange der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß eine dem Kolbenbolzen zugewandte Innenwand des Pleuelauges wenigstens teilweise derart von einer zylindrischen Form abweichend ausgeformt ist, daß die Innenwand an einer jeweiligen den Kolbenbolzen mit Kraft beaufschlagenden Seite einer Außenwand des Kolbenbolzens in unter Last deformiertem Zustand folgt.

Dies hat den Vorteil, daß ein Klemmen des Kolbenbolzens im Pleuelauge wirksam verhindert und gleichzeitig eine Ölversorgung im Pleuelauge verbessert ist sowie ein Verschleiß im Pleuelauge gleichmäßiger erfolgt. Zusätzliche Ölbohrungen in einem mittleren Bereich des Pleuelauges, beispielsweise Bohrungen an der Kolbenseite bzw. vom großen Pleuelauge ausgehend, können ggf. entfallen. Für den Kolbenbolzen ergibt sich eine Freiheitsgraderhöhung bzgl. einer Deformation desselben.

Beispielsweise ist die Innenwand des Pleuelauges im Längsschnitt wenigstens in einem vorbestimmten Bereich Konvex ausgebildet, wobei zweckmäßigerweise die Innenwand des Pleuelauges an äußeren Enden desselben um eine vorbestimmte Länge bzgl. einem im Querschnitt zylindrischen Pleuelauge erweitert ist.

Zur entsprechenden Führung des Kolbenbolzens im Pleuelauge ist der Durchmesser des Pleuelauges in einem vorbestimmten mittleren Bereich zwischen äußeren Enden desselben konstant und entspricht einem Durchmesser eines herkömmlichen im Querschnitt zylindrischen Pleuelauges.

In einer bevorzugten Ausführungsform ist das Pleuelauge ein Parallelpleuel, Stufenpleuel, Trapezpleuel oder ein Stufentrapezpleuel.

Für eine besonders konturnahe Formübereinstimmung zwischen Pleuelauge und unter Belastung verformten Kolbenbolzen verringert sich der Durchmesser des Pleuelauges in einem vorbestimmten Bereich ausgehend von den beiden äußeren Enden des Pleuelauges nach innen.

In einer besonders bevorzugten Ausführungsform ist in dem Pleuelauge zur Aufnahme des Kolbenbolzens eine Formbohrung ausgebildet. Durch eine derartige erfindungsgemäße Formbohrung für das Pleuelauge erfolgt ebenfalls keine Zwangsführung des unteren Pleuelauges an der Kurbelwelle, so daß auch dort ein Klemmen bzw. erhöhter Verschleiß vermieden ist. Es wird ein weitergehender Toleranzausgleich der Winkelfehler erzielt.

Beispielsweise ist das Pleuelauge in einem äußeren Bereich sich mit einer vorbestimmten Funktion erweiternd ausgebildet. Diese mathematische Funktion umfaßt beispielsweise eine Splinefunktion, aneinander gereihte geraden unterschiedlicher Steigung und/oder eine Hyperbel.

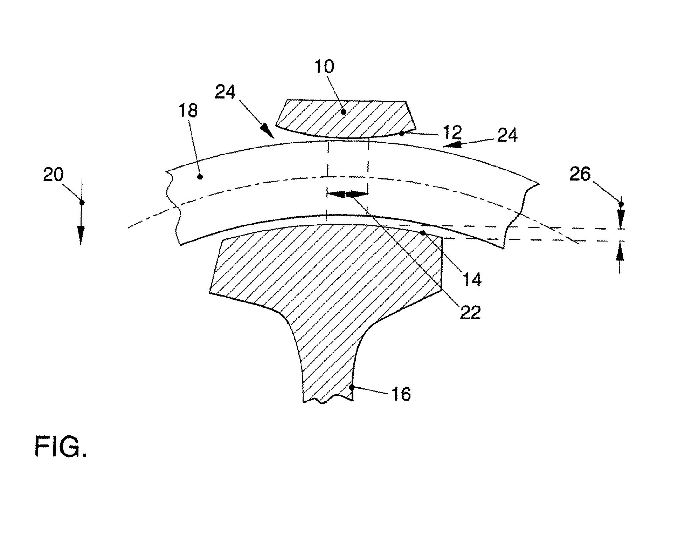

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt in der einzigen Fig. einen Teil einer erfindungsgemäßen Pleuelstange mit einem unter Last befindlichen Kolbenbolzen in einem erfindungsgemäß ausgebildeten Pleuelauge.

Die einzige Fig. veranschaulicht beispielhaft an einem Trapezpleuel ein erfindungsgemäß ausgebildetes Pleuelauge 10 mit Innenwand 12, 14 sowie einem Pleuelschaft 16. Ein Pleuelfuß mit zugehörigem Pleueldeckel ist nicht dargestellt. Durch das Pleuelauge 10 greift ein Kolbenbolzen 18, der an den seitlich überstehenden Enden in entsprechenden nicht dargestellten Naben eines nicht dargestellten Kolbens gelagert ist.

In dem dargestellten Zustand erfolgt eine Krafteinwirkung auf den Kolben in Richtung eines Pfeils 20, wodurch sich eine entsprechende Gegenkraft durch die Innenwand 14 ergibt, was zu der dargestellten Deformierung des Kolbenbolzen 18 führt.

Erfindungsgemäß ist die Innenfläche 12, 14 als Formbohrung derart ausgebildet, daß die Innenfläche an einer jeweiligen Seite dem verformten Kolbenbolzen 18 folgt. Dies ist jeweils diejenige Seite, an der es zu einer Kraftwirkung zwischen Kolbenbolzen 18 und Innenwand 12, 14 kommt. Mit anderen Worten erweitert sich die Bohrung für den Kolbenbolzen 18 nach außen. In dem dargestellten Zustand kommt es zu einer Kraftwirkung zwischen dem Kolbenbolzen 18 und der in der Fig. unteren Innenwand 14. Der in der Fig. sichtbare Abstand zwischen dem Kolbenbolzen 18 und der Innenwand 14 ist lediglich aus Gründen einer übersichtlichen Darstellung vorhanden, tatsächlich liegt der unter Last verformte Kolbenbolzen nahezu vollflächig an der Innenfläche 14 an. Aus der Fig. ist unmittelbar ersichtlich, daß es aufgrund des verformten Kolbenbolzens 18 nicht zu entsprechenden Druckspitzen in einem äußeren Bereich der Innenwand 14 kommt.

In einem mittleren Bereich 22 ist die Innenwand zylindrisch mit konstantem Querschnitt ausgebildet. An einem äußeren Ende 24 der Innenwand 12, 14 bzw. des Pleuelauges 10 hat die Innenwand 12, 14 einen bzgl. einer zylindrischen Bohrung mit konstantem Durchmesser um eine vorbestimmte Länge 26 vergrößerten Radius. Dies erzielt die gewünschte flächige Anlage des unter Last verformten Kolbenbolzens 18 sowohl an der in der Fig. oberen Innenwand 12 als auch an der in der Fig. unteren Innenwand 14, je nachdem an welcher Stelle zwischen Kolbenbolzen und Innenwand 12, 14 Kräfte auftreten.

Der zylindrische Abschnitt 22 ist in der einzigen Fig. lediglich aus Darstellungsgründen relativ schmal dargestellt. Tatsächlich ist es besonders vorteilhaft, wenn sich der äußere abgeschrägte Abschnitt der Innenwand 12, 14 beidseits des zylindrischen Abschnittes 22 von außen nur auf etwa 2mm erstreckt, während der zylindrische Abschnitt 22 den größten Teil des Querschnitts des Pleuelauges 10 ausbildet.

Durch die erfindungsgemäße Formgebung im Bereich der Innenwand 12, 14 des Pleuelauges 10 können Nachbearbeitungsschritte, wie beispielsweise ein Durchbohren des Pleuelschaftes 16 vom Pleuelfuß zum Pleuelauge, eine zusätzliche Bohrung im Pleuelauge von außen oder Nuten in den Pleuelbuchsen entfallen.

### BEZUGSZEICHENLISTE

- 10: Pleuelauge
- 12: Innenwand
- 14: Innenwand
- 16: Pleuelschaft
- 18: Kolbenbolzen
- 20: Pfeil
- 22: mittlerer Bereich
- 24: äußeres Ende
- 26: vorbestimmte Länge

## Patentansprüche

1. Pleuelstange für eine Brennkraftmaschine mit einem Pleuelauge (10), welches mittels eines Kolbenbolzens (18) schwenkbar mit einem Kolben verbindbar ist, **dadurch gekennzeichnet, daß** eine dem Kolbenbolzen (18) zugewandte Innenwand (12, 14) des Pleuelauges (10) wenigstens teilweise derart von einer zylindrischen Form abweichend ausgeformt ist, daß die Innenwand an einer jeweiligen den Kolbenbolzen (18) mit Kraft beaufschlagenden Seite (12, 14) einer Außenwand des Kolbenbolzens (18) in unter Last deformiertem Zustand folgt.

2. Pleuelstange nach Anspruch 1, **dadurch gekennzeichnet, daß** die Innenwand (12, 14) des Pleuelauges (10) im Längsschnitt wenigstens in einem vorbestimmten Bereich Konvex ausgebildet ist.

3. Pleuelstange nach Anspruch 1 oder 2, **dadurch gekennzeichnet, daß** die Innenwand (12, 14) des Pleuelauges (10) an äußeren Enden (24) desselben um eine vorbestimmte Länge (26) bzgl. einem im Querschnitt zylindrischen Pleuelauge erweitert ist.

4. Pleuelstange nach einem der vorhergehenden Ansprüche, **dadurch gekennzeichnet, daß** der Durchmesser des Pleuelauges (10) in einem vorbestimmten mittleren Bereich (22) zwischen äußeren Enden (24) desselben konstant ist und einem Durchmesser eines herkömmlichen im Querschnitt zylindrischen Pleuelauges entspricht.

5. Pleuelstange nach einem der vorhergehenden Ansprüche, **dadurch gekennzeichnet, daß** das Pleuelauge (10) ein Parallelpleuel, Stufenpleuel, Trapezpleuel oder ein Stufentrapezpleuel ist.

6. Pleuelstange nach einem der vorhergehenden Ansprüche, **dadurch gekennzeichnet, daß** sich der Durchmesser des Pleuelauges (10) in einem vorbestimmten Bereich ausgehend von den beiden äußeren Enden (24) des Pleuelauges (10) nach innen verringert.

7. Pleuelstange nach einem der vorhergehenden Ansprüche, **dadurch gekennzeichnet, daß** in dem Pleuelauge (10) zur Aufnahme des Kolbenbolzens (18) eine Formbohrung ausgebildet ist.

8. Pleuelstange nach einem der vorhergehenden Ansprüche, **dadurch gekennzeichnet, daß** das Pleuelauge in einem äußeren Bereich sich mit einer vorbestimmten mathematischen Funktion erweiternd ausgebildet ist.

9. Pleuelstange nach Anspruch 8, **dadurch gekennzeichnet, daß** die mathematische Funktion eine Splinefunktion, aneinander gereihte geraden unterschiedlicher Steigung und/oder eine Hyperbel umfaßt.
